# DEMANDE DE BREVET EUROPEEN

(11) **EP 0 654 507 A1**
(43) Date de publication de la demande: **24.05.1995**
(21) Numéro de dépôt: 94402557.6
(22) Date de dépôt: 14.11.1994
(51) Int. Cl.: C09C 1/00, C01G 25/00, C01G 25/02

(54) **Pigments à base d'oxyde de zirconium et de cérium, de praséodyme et/ou de terbium, leur procédé de préparation et leur utilisation**

(30) Priorité: 18.11.1993 FR 9313764
(71) Demandeur: RHONE-POULENC CHIMIE, 92408 Courbevoie Cédex (FR)
(72) Inventeur: Huguenin, Denis, F-75013 Paris (FR); Pettini, Fabienne, F-75019 Paris (FR); Seguelong, Thierry, 92000 Nanterre (FR)
(74) Mandataire: Dubruc, Philippe

(57) **Abrégé**

La présente invention concerne des pigments colorés de type jaune orange qui sont caractérisés en ce qu'ils sont à base d'oxyde de zirconium et d'au moins une terre rare choisie parmi le cérium, le terbium et le praséodyme.

Ces pigments peuvent être utilisés comme matière colorante dans des matières plastiques, des peintures. ces lasures, des caoutchoucs, des céramiques, des glaçures, des papiers, des encres, des produits cosmétiques, des teintures et des revêtements stratifiés.

## Description

La présente invention concerne des pigments à base d'oxyde de zirconium, leur procédé de préparation et leur utilisation pour la coloration de divers matériaux.

Les pigments minéraux de coloration sont déjà largement utilisés dans de nombreuses industries notamment dans celles des peintures, des matières plastiques et des céramiques. Dans de telles applications, les propriétés que sont, entre autres, la stabilité thermique et/ou chimique, la dispersabilité (aptitude du produit à se disperser correctement dans un milieu donné), la couleur intrinsèque, le pouvoir de coloration et le pouvoir opacifiant, constituent autant de critères particulièrement importants à prendre en considération dans le choix d'un pigment convenable.

Malheureusement, le problème est que la plupart des pigments minéraux qui conviennent pour des applications telles que ci-dessus et qui sont effectivement utilisés à ce jour à l'échelle industrielle, font généralement appel à des métaux (cadmium, plomb, chrome, cobalt notamment) dont l'emploi devient de plus en plus sévèrement réglementé, voire interdit, par les législations de nombreux pays, compte tenu en effet de leur toxicité réputée très élevée.

On peut ainsi plus particulièrement citer le cas des pigments jaunes à base de sulfures de cadmium ou de chromite de plomb.

On voit donc que la recherche, le développement et finalement la mise à disposition de nouveaux pigments minéraux de substitution constituent à ce jour un enjeu économique et industriel des plus importants.

L'objet de la présente invention est de proposer de nouveaux pigments de couleur jaune/orange pouvant se substituer aux produits existants sur le marché et dont l'avenir est condamné à cause de leur toxicité.

Dans ce but, le pigment coloré de couleur jaune selon un premier mode de réalisation de l'invention est caractérisé en ce qu'il comprend un oxyde de zirconium essentiellement sous forme monoclinique et un additif qui est le cérium.
Selon un second mode de réalisation de l'invention, le pigment de couleur jaune orange est caractérisé en ce qu'il comprend un oxyde de zirconium essentiellement sous forme monoclinique et un additif qui est le praséodyme et en ce qu'il présente une coordonnée chromatique a (mesurée selon la norme donnée plus loin) d'au moins 10.

Selon un troisième mode de réalisation, le pigment coloré jaune orange est caractérisé en ce qu'il comprend un oxyde de zirconium et un additif qui est le terbium.

Selon un quatrième mode de réalisation, le pigment coloré jaune orange est caractérisé en ce qu'il comprend un oxyde de zirconium et, à titre d'additifs, du cérium et du praséodyme.

Par ailleurs, l'invention concerne un procédé de préparation de tels pigments qui est caractérisé en ce qu'on forme un mélange comprenant des oxydes de zirconium et des additifs précités ou des précurseurs de ces oxydes et on calcine le mélange ainsi formé.

D'autres caractéristiques, détails et avantages de l'invention apparaîtront plus clairement à la lecture de la description et des exemples qui vont suivre.

Le pigment de l'invention est à base tout d'abord d'oxyde de zirconium ZrO₂ qui en constitue l'élément majoritaire. Il comprend en outre au moins un additif qui est choisi parmi le cérium, le praséodyme et le terbium selon les modes de réalisation qui ont été décrits plus haut. Les additifs sont présents dans le pigment sous forme d'oxydes essentiellement. La teneur totale en additif est généralement d'au plus 20%, de préférence d'au plus 10% et encore plus préférentiellement d'au plus 5% exprimée en poids d'oxyde d'additif. Par ailleurs, la teneur minimale est habituellement d'au moins 0,5 et plus particulièrement d'au moins 1%.

Bien entendu, les pigments de l'invention comprennent tous ceux que l'on peut obtenir en combinant deux ou plusieurs additifs du type précité. Dans le cas du troisième mode de réalisation, c'est à dire le pigment à base de zirconium et de terbium, ce pigment peut comprendre en outre du cérium et/ou du praséodyme.

Dans le cas d'une combinaison cérium - praséodyme, le cérium peut représenter de préférence au moins 50% et encore plus particulièrement au moins 90% en poids de l'ensemble cérium - praséodyme. Le cérium permet d'obtenir dans ce cas des pigments dans lequel l'oxyde de zirconium est présent uniquement sous forme monoclinique.

Selon une variante préférée de l'invention, le ou les additifs sont au moins en partie et de préférence en totalité inclus dans la maille de l'oxyde de zirconium de sorte que le pigment constitue une solution solide. Dans ce cas, le pigment présente une grande pureté phasique car on n'observe pas la présence d'une phase constituée de l'oxyde de l'additif.

La forme cristalline de l'oxyde de zirconium peut varier en fonction du taux d'additif présent dans le pigment. Dans le cas du premier, du second et du quatrième mode de réalisation de l'invention, l'oxyde de zirconium se présente essentiellement sous forme monoclinique. Pour le troisième mode de réalisation, l'oxyde de zirconium peut évoluer d'une structure 100% monoclinique jusqu'à une structure 100% tétragonale et plus particulièrement jusqu'à une structure 80% tétragonale et 20% monoclinique. Pour le premier, second et quatrième mode de réalisation et selon une variante particulière pour le troisième mode, la teneur en oxyde de zirconium sous forme tétragonale est d'au plus 30% en volume et plus particulièrement d'au plus 20%. Cette teneur en différentes phases est mesurée selon la méthode d'Evans et al., British Ceram. Trans. J. 83 (1984) pp 39-43. On notera que plus la teneur en phase tétragonale augmente plus la couleur se déplace vers le jaune.

Le pigment de l'invention peut aussi comprendre un stabilisant de la structure cristalline de l'oxyde de zirconium. Ces stabilisants sont bien connus, il s'agit habituellement des terres rares. On peut citer tout particulièrement l'yttrium. Bien entendu, les terres rares mentionnées plus haut à titre d'additifs du pigment jouent d'une manière inhérente leur rôle de stabilisant de l'oxyde de zirconium. On notera ici que l'on peut donc faire entrer dans la composition des pigments de l'invention en plus des terres rares précitées d'autres terres rares en tant que stabilisant. Par terres rares, on entend, outre l'yttrium, les éléments de la classification périodique de numéro atomique compris inclusivement entre 57 et 71.

Dans le cas de l'utilisation de l'yttrium et du troisième mode de réalisation de l'invention, on peut stabiliser l'oxyde de zirconium sous la forme cubique et obtenir un produit à 100% sous forme cubique. Cette structure confère au pigment une couleur jaune pâle.

En ce qui concerne enfin les coordonnées chromatiques des produits de l'invention, on peut mentionner que les produits selon le second mode de réalisation présentent de préférence une coordonnée a d'au moins 15 et qu'il en est de même pour les produits selon le quatrième mode dans le cas où la teneur en cérium est d'au plus 50%. Enfin, dans le cadre du troisième mode de réalisation, la coordonnée a est de préférence d'au moins 10.

Le procédé de préparation du pigment de l'invention va maintenant être décrit.

Ce procédé comporte essentiellement deux étapes. Dans la première, on forme un mélange comprenant des oxydes de zirconium et des additifs ou stabilisants précités ou des précurseurs de ces oxydes. Comme precurseurs d'oxydes, on peut mentionner les sels d'acides organiques ou norganiques tels que les nitrates, chlorures, sulfates, acétates, oxalates. Les quantités d'oxydes ou de précurseurs sont ajustées de manière à correspondre à la stoechiométrie du produit final désiré.

On notera enfin que dans la préparation du mélange, on n'introduit pas de composés susceptibles d'apporter du silicium, par exemple de la silice, et de produire, dans la réaction ultérieure une quantité significative de zircon (silicate de zirconium). En d'autres termes, on travaille dans des conditions telles que le zirconium sera présent dans le pigment substantiellement sous forme d'oxyde de zirconium. De préférence, on ne travaille pas en présence de flux.
En ce qui concerne l'oxyde de zirconium, il est préférable d'utiliser comme produit de départ un oxyde présentant une granulométrie moyenne d'au moins 5µm. Dans le cas de l'utilisation d'un oxyde de zirconium stabilisé, un produit qui convient particulièrement bien est celui décrit dans FR-A-2595680. Pour les additifs, il est intéressant d'utiliser des oxydes ou sels mixtes comme par exemple (Ce,Pr)O₂. On obtient dans ce cas une couleur plus soutenue.

Dans une deuxième étape, le mélange est calciné. Cette calcination se fait habituellement sous air. La température est habituellement d'au moins 1550°C et plus particulièrement comprise entre 1600 et 1700°C. La durée de la calcination est d'environ 1 à 12 heures, de préférence au moins 3 heures.

A l'issue de la calcination, le produit peut être broyé et/ou désaggloméré selon tout moyen connu de manière à amener la granulométrie à la valeur souhaitée en fonction de l'application qui sera faite du pigment.

Les pigments selon l'invention conviennent à la coloration de nombreux matériaux, tels que plastiques, peintures et céramiques.

Ainsi, et plus précisément encore, ils peuvent être utilisés dans la coloration de matières plastiques qui peuvent être du type thermoplastique ou thermodurcissable.

Comme résines thermoplastiques susceptibles d'être colorées selon l'invention, on peut citer, à titre purement illustratif, le chlorure de polyvinyle, l'alcool polyvinylique, le polystyrène, les copolymères styrène-butadiène, styrène-acrylonitrile, acrylonitrile-butadiène-styrène (A.B.S.), les polymères acryliques notamment le polyméthacrylate de méthyle, les polyoléfines telles que le polyéthylène, le polypropylène, le polybutène, le polyméthylpentène, les dérivés cellulosiques tels que par exemple l'acétate de cellulose, I'acéto-butyrate de cellulose, l'éthylcellulose, les polyamides dont le polyamide 6-6.

Concernant les résines thermodurcissables pour lesquelles les pigments selon l'invention conviennent également. on peut citer, par exemple, les phénoplastes, les aminoplastes notamment les copolymères urée-formol, mélamine-formol, les résines époxy et les polyesters thermodurcissables.

On peut également mettre en oeuvre les pigments de l'invention dans des polymères spéciaux tels que des polymères fluorés en particulier le polytétrafluoréthylène (P.T.F.E.), les polycarbonates, les élastomères silicones, les polyimides.

Dans cette application spécifique pour la coloration des plastiques, on peut mettre en oeuvre les pigments de l'invention directement sous forme de poudres. On peut également, de préférence, les mettre en oeuvre sous une forme pré-dispersée, par exemple en prémélange avec une partie de la résine, sous forme d'un concentré pâte ou d'un liquide, ce qui permet de les introduire à n'importe quel stade de la fabrication de la résine. Ce dernier point constitue un avantage particulièrement important des pigments selon l'invention.

Ainsi, les pigments selon l'invention peuvent être incorporés dans des matières plastiques telles que celles mentionnées ci-dessus dans une proportion pondérale allant généralement soit de 0,01 à 5% (ramenée au produit final), soit de 40 à 70% dans le cas d'un concentré.

Les pigments de l'invention peuvent être également utilisés dans le domaine des peintures et lasures et plus particulièrement dans les résines suivantes : résines alkydes dont la plus courante est dénommée glycérophtalique, les résines modifiées à l'huile longue ou courte; les résines acryliques dérivées des esters de l'acide acrylique (méthylique ou éthylique) et méthacrylique éventuellement copolymérisés avec l'acrylate d'éthyle, d'éthyl-2 hexyle ou de butyle; les résines vinyliques comme par exemple l'acétate de polyvinyle, le chlorure de polyvinyle, le butyralpolyvinylique, le formalpolyvinylique, et les copolymères chlorure de vinyle et acétate de vinyle ou chlorure de vinylidène; les résines aminoplastes ou phénoliques le plus souvent modifiées; les résines polyesters; les résines polyuréthannes; les résines époxy, les résines silicones.

Généralement, les pigments sont mis en oeuvre à raison de 5 à 30% en poids de la peinture, et de 0,1 à 5% en poids du lasure.

Les pigments de l'invention conviennent également pour la coloration des matières céramiques, comme par exemple les porcelaines, les faïences et les grès, et ceci soit par coloration à coeur de la céramique (mélange physique entre la poudre céramique et le pigment), soit par coloration uniquement de la surface de cette dernière au moyen de glaçures (compositions verrières de revêtement) contenant le pigment.

Dans cette application, la quantité de pigments mise en oeuvre est généralement comprise entre 1 et 30% en poids par rapport soit à l'ensemble de la céramique, soit par rapport à la glaçure seule.

En outre, les pigments selon l'invention sont également susceptibles de convenir pour des applications dans l'industrie du caoutchouc, notamment dans les revêtements pour sols, dans l'industrie du capier et des encres d'imprimerie, dans le domaine de la cosmétique, ainsi que nombreuses autres utilisations comme par exemple, et non limitativement, les teintures, le finissage des cuirs et les revêtements stratifiés pour cuisines et autres plans de travail.

Enfin, l'invention concerne les compositions de matière colorées notamment du type plastiques, peintures, lasures, caoutchoucs, céramiques, glaçures, papiers, encres, produits cosmétiques, teintures et revêtements stratifiés qui comprennent des pigments colorés tels que décrits ci-dessus.

Des exemples concrets mais non limitatifs illustrant l'invention vont maintenant être donnés.

### EXEMPLE 1

Cet exemple décrit la préparation de pigments selon l'invention à base de terbium.

On mélange dans un creuset d'agate les oxydes Tb₄O₇ et ZrO₂ (Rhône-Poulenc) en faisant varier le pourcentage massique en oxyde de terbium. Le mélange est calciné dans un four à moufle sous air à 1600°C pendant 3 heures (montée et descente régulées à 200°C/h ).

On donne dans le tableau ci-dessous les caractéristiques des produits obtenus.

La coloration intrinsèque des pigments selon l'invention est quantifiée au moyen des coordonnées chromatiques L, a et b données dans le système CIE 1976 (L, a, b) tel que défini par la Commission Internationale d'Eclairage et répertorié dans le Recueil des Normes Françaises (AFNOR), couleur colorimétrique n° X08-12 (1983). Elles sont déterminées au moyen d'un colorimètre commercialisé par la Société Pacific Scientific. La nature de l'illuminant est D65. La surface d'observation est une pastille circulaire de 12,5 cm² de surface. Les conditions d'observations correspondent à une vision sous un angle d'ouverture de 10°. Dans les mesures données, la composante spéculaire est exclue.

L donne une mesure de la réflectance (nuance clair/sombre) et varie ainsi de 100 (blanc) à 0 (noir).
a et b sont les valeurs des tendances colorées :
a positif = rouge
a négatif = vert
b positif = jaune
b négatif = bleu
L représente donc la variation du noir au blanc, a la variation du vert au rouge et b la variation du jaune au bleu.

La structure est déduite de l'analyse des spectres de diffraction X.

**Tableau 1**

| **Essais** | **Structure** | **L** | **a** | **b** |
|---|---|---|---|---|
| ZrO₂ + 1% Tb₄O₇ | 100% monoclinique | 79,8 | 12,9 | 50,2 |
| ZrO₂ + 5% Tb₄0₇ | 20% tétragonale | 74,5 | 20,6 | 61,8 |
| | 80% monoclinique | | | |
| ZrO₂ + 10% Tb₄0₇ | 60 % tétragonale | 76 | 18,5 | 52,3 |
| | 40% monoclinique | | | |
| ZrO₂ + 15% Tb₄0₇ | 80% tétragonale | 76,9 | 18,0 | 50,6 |
| | 20% monoclinique | | | |

### EXEMPLE 2

On procède dans les mêmes conditions que dans l'exemple 1 mais en faisant varier la nature et les proportions d'additifs. Les résultats sont donnés dans le tableau 2 ci-dessous.

**Tableau 2**

| Essais | Pr₆O₁₁ | Pr₆O₁₁/Tb₄O₇ | Pr₆O₁₁/CeO₂ | Tb₄O₇/CeO₂ | Tb₄O₇/CeO₂ | Tb₄O₇/CeO₂ | Tb₄O₇/Pr₆O₁₁/CeO₂ |
|---|---|---|---|---|---|---|---|
| Proportions | | (50/50) | (50/50) | (50/50) | (75/25) | (66/33) | (1/3:1/3:1/3) |
| % en poids | 5 | 5 | 5 | 5 | 5 | 5 | 5 |
| L | 71,2 | 69,1 | 73,0 | 70,9 | 69,9 | 68,6 | 69,5 |
| a | 17,7 | 21,2 | 18,3 | 26,3 | 25,4 | 27,6 | 23,3 |
| b | 57,5 | 56,0 | 58,4 | 59,9 | 57,9 | 59,0 | 57,3 |
| Structure | Mono +Tétra (<20%) +Pr₆O₁₁ | Mono +Tétra (<20%) | Mono+ trace tétra | Mono | Mono +Tétra (<20%) | Mono+ trace tétra | Mono+ trace tétra |

### EXEMPLE 3

On procède dans les mêmes conditions que dans l'exemple 1 mais en partant d'un mixte (Ce_{0,95}Pr_{0,05})O₂ pour le produit à base de cérium et de praséodyme. Les teneurs en additif sont de 5% en poids.
Les résultats sont donnés dans le tableau 3.

**Tableau 3**

| Essais | Ce/Pr | Ce/Pr | CeO₂/Tb₄O₇ |
|---|---|---|---|
| Proportions | (95/5) | (98/2) | (95/5) |
| L | 82,2 | 86,5 | 84,7 |
| a | 7,4 | 2,4 | 6,4 |
| b | 53,2 | 40,2 | 42,7 |
| Structure | Mono | Mono | Mono |

L'ensemble des exemples ci-dessus montre que les pigments de l'invention couvrent une large gamme de couleur, ces exemples concernant des produits s'étendant pour les coordonnées colorimétriques du point a=2,4, b=40,2 au point a=26,3, b=59,9.

### EXEMPLE 4

Cet exemple décrit l'application du pigment de l'exemple 1 à 5% de Tb₄0₇ dans une glaçure.

On prépare une barbotine de composition suivante :
- Fritte FERRO F 87: 80 g Cette fritte contient 27% de SiO₂ et 9% de PbO ( en poids )
- Pigment: 5 g
- Gomme arabique: 0,24 g
- Eau permutée: 50 ml

Les produits constituant la barbotine sont broyés dans une jarre en corindon de 250 ml munie de billes et d'un broyeur planétaire pendant 1 heure. Le mélange broyé est tamisé à 100µm.

On applique la glaçure ainsi obtenue par pulvérisation au pistolet sur un tesson de faïence blanche. La masse de glaçure déposée est de 20 g/dm².

On cuit 30 minutes à 950°C après une montée en température de 6 heures.

Les résultats colorimétriques sont les suivants.

**Tableau 4**

| | **L** | **a** | **b** |
|---|---|---|---|
| Pigment | 74,5 | 20,6 | 61,8 |
| Carreau | 71,8 | 23,8 | 70,9 |

Le pigment reste stable en émaillage, le carreau est orange.

## Revendications

**1 -** Pigment coloré de couleur jaune caractérisé en ce qu'il comprend un oxyde de zirconium essentiellement sous forme monoclinique et un additif qui est le cérium.

**2 -** Pigment coloré de couleur jaune orange caractérisé en ce qu'il comprend un oxyde de zirconium essentiellement sous forme monoclinique et un additif qui est le praséodyme et en ce qu'il présente une coordonnée chromatique a d'au moins 10.

**3 -** Pigment coloré de couleur jaune orange caractérisé en ce qu'il comprend un oxyde de zirconium et un additif qui est le terbium.

**4 -** Pigment selon la revendication 3 caractérisé en ce qu'il comprend en outre, comme additif supplémentaire, du cérium et/ou du praséodyme.

**5 -** Pigment coloré de couleur jaune orange caractérisé en ce qu'il comprend un oxyde de zirconium et, à titre d'additifs, du cérium et du praséodyme.

**6 -** Pigment selon l'une des revendications 3 à 5 caractérisé en ce que l'oxyde de zirconium est essentiellement sous forme monoclinique.

**7 -** Pigment selon l'une quelconque des revendications précédentes, caractérisé en ce que l'oxyde de zirconium est en partie sous forme tétragonale, plus particulièrement pour au plus 30% en volume.

**8 -** Pigment selon l'une quelconque des revendications précédentes, caractérisé en ce que la teneur en additif est d'au plus 10% en poids.

**9 -** Pigment selon l'une quelconque des revendications précédentes, caractérisé en ce que la teneur en additif est d'au moins 0,5% en poids.

**10 -** Pigment selon l'une quelconque des revendications précédentes, caractérisé en ce que l'additif est inclus dans la maille d'oxyde de zirconium.

**11 -** Procédé de préparation d'un pigment selon l'une quelconque des revendications précédentes, caractérisé en ce qu'on forme un mélange comprenant des oxydes de zirconium et des additifs précités ou des précurseurs de ces oxydes et on calcine le mélange ainsi formé.

**12 -** Procédé selon la revendication 11, caractérisé en ce qu'on calcine à une température d'au moins 1550°C.

**13 -** Procédé selon la revendication 11 ou 12, caractérisé en ce qu'on utilise des oxydes mixtes d'additifs

**14 -** Utilisation des pigments colorés selon l'une quelconque des revendications 1 à 10 dans des matières plastiques, des peintures, des lasures, des caoutchoucs, des céramiques, des glaçures, des papiers, des encres, des produits cosmétiques, des teintures et des revêtements stratifiés.

**15 -** Compositions de matière colorées notamment du type plastiques, peintures, lasures, caoutchoucs, céramiques, glaçures, papiers, encres, produits cosmétiques, teintures et revêtements stratifiés, caractérisées en ce qu'elles comprennent des pigments colorés tels que définis à l'une quelconque des revendications 1 à 10.
